(19) Europäisches Patentamt / European Patent Office / Office européen des brevets

(11) **EP 4 599 286 B1**

(12) **FASCICULE DE BREVET EUROPEEN**

(45) Date de publication et mention de la délivrance du brevet:
**03.06.2026 Bulletin 2026/23**

(21) Numéro de dépôt: **23783911.3**

(22) Date de dépôt: **05.10.2023**

(51) Classification Internationale des Brevets (IPC):
**G02B 27/01** *(2006.01)*

(52) Classification Coopérative des Brevets (CPC):
**G02B 27/0149;** G02B 2027/0154; G02B 2027/0156; G02B 2027/0165

(86) Numéro de dépôt international:
**PCT/EP2023/077647**

(87) Numéro de publication internationale:
**WO 2024/074654 (11.04.2024 Gazette 2024/15)**

(54) **DISPOSITIF D'AFFICHAGE TÊTE HAUTE**

HEAD-UP-ANZEIGEVORRICHTUNG

HEAD-UP DISPLAY DEVICE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **07.10.2022 FR 2210293**

(43) Date de publication de la demande:
**13.08.2025 Bulletin 2025/33**

(73) Titulaire: **Eyelights**
**31670 Labège (FR)**

(72) Inventeurs:
- **NAGTEGAELE, Patrice**
  **31750 Escalquens (FR)**
- **DUFLOT, Romain**
  **31320 Castane-Tolosan (FR)**
- **AILLOUD, Quentin**
  **31450 Varennes (FR)**

(74) Mandataire: **Lavoix**
**2, place d'Estienne d'Orves**
**75441 Paris Cedex 09 (FR)**

(56) Documents cités:
**EP-A1- 3 076 221     GB-A- 2 049 984**

**Description**

La présente invention concerne un dispositif d'affichage tête haute pour un véhicule. La présente invention concerne aussi un véhicule associé.

Les véhicules, notamment automobiles, sont équipés de panneaux de contrôle, aussi appelés panneaux d'instrumentation (en anglais « instrument cluster ») ou tableau de bord, pour présenter au conducteur les informations utiles à la conduite et au fonctionnement du véhicule. A cet effet, le panneau de contrôle comprend les instruments de bord du véhicule dont certains sont imposés par la législation.

Pour un véhicule automobile, le panneau de contrôle est traditionnellement intégré dans la planche de bord du véhicule sous le parebrise, derrière le volant. Typiquement, un tel panneau de contrôle est disposé au moins à -15° de la direction de regard d'un conducteur moyen regardant la route, environ à 50 centimètres des yeux. Le conducteur est alors amené à quitter la route des yeux pour visualiser le panneau de contrôle, ce qui diminue la vigilance et accroit la fatigue oculaire par l'effort d'accommodation visuelle constamment requis.

Pour permettre la visualisation des informations utiles de manière plus sécuritaire, il est connu d'utiliser des afficheurs tête-haute venant retransmettre au conducteur quelques informations issues du panneau de contrôle.

Néanmoins, de tels afficheurs viennent occuper un espace additionnel dans le véhicule, en redondance du panneau de contrôle, et sont pour certains très volumineux. En outre, dans certaines situations, notamment en cas de fortes luminosités, les informations émises par l'afficheur tête haute sont parfois moins contrastées, ce qui peut nuire à la sécurité de conduite. Le document GB2049984 divulgue un tel dispositif connu de l'état de la technique antérieure.

Il existe donc un besoin pour un dispositif ergonomique permettant de faciliter la visualisation par le conducteur d'informations utiles au contrôle du véhicule de sorte à améliorer la conduite, la sécurité et le maintien de la vigilance du conducteur.

A cet effet, la présente description a pour objet un dispositif d'affichage tête haute pour un véhicule, le dispositif d'affichage comprenant un mode d'affichage tête haute et un mode d'affichage direct, chaque mode étant ajustable pour différents profils de conducteurs, le dispositif d'affichage comprenant :

- un support propre à être positionné en vis-à-vis du haut du corps d'un conducteur en position de conduite, au moins une portion du support, dite portion utile, étant partiellement réfléchissante,
- une unité d'émission d'informations de contrôle du véhicule, l'unité d'émission comprenant un écran propre à émettre au moins un faisceau lumineux, et
- un mécanisme de réglage de la position et/ou de l'orientation de l'écran en fonction du profil de conducteur considéré et de sorte que :

- dans le mode d'affichage tête haute, le faisceau lumineux émis par l'écran est réfléchi sur la portion utile du support pour former une image virtuelle dans le champ de vision du profil de conducteur considéré en position de conduite, et
- dans le mode d'affichage direct, les informations émises par l'écran sont directement lisibles sur l'écran par le profil de conducteur considéré.

Selon d'autres aspects avantageux, le dispositif d'affichage comprend une ou plusieurs des caractéristiques suivantes, prises isolément ou suivant toutes les combinaisons techniquement possibles :

- le dispositif comprend au moins un élément, dit élément HUD, propre à masquer la vision directe de l'écran dans le mode d'affichage tête haute ;

  - le ou au moins un élément HUD est :

    - le mécanisme de réglage, le mécanisme de réglage étant propre à régler la position et/ou l'orientation de l'écran de sorte à masquer la vision directe de l'écran par le profil de conducteur considéré dans le mode d'affichage tête haute, et/ou
    - l'écran, l'écran présentant un angle de vue inférieur ou égal à 45 degrés dans le mode d'affichage tête haute de sorte à limiter la vision directe de l'écran, et/ou
    - un obturateur, dit obturateur écran, l'obturateur écran étant propre à, dans le mode d'affichage tête haute, masquer la vision directe de l'écran pour le profil de conducteur considéré, sans masquer la vision directe de l'écran par le profil de conducteur considéré dans le mode d'affichage direct ;

- l'écran présente une surface d'émission comprise dans un plan, dit plan écran, lorsque le ou au moins un élément HUD est le mécanisme de réglage, le mécanisme de réglage est propre à régler la position et/ou l'orientation de l'écran dans le mode d'affichage tête haute de sorte que l'angle orienté entre, le plan écran, et la normale à la portion utile passant par le centre de l'écran, dit angle HUD, est inférieur ou égal à un angle, dit angle limite HUD, l'angle limite HUD étant l'angle à partir duquel l'écran est non visible pour le profil de conducteur considéré tout en permettant la formation d'une image virtuelle dans le champ de vision du profil de conducteur par réflexion du faisceau émis par l'écran sur la portion utile du support ;

- le dispositif comprend au moins un élément, dit élément direct, propre à empêcher, dans le mode d'affichage direct, la génération d'une image virtuelle parasite issue de la réflexion du faisceau émis par l'écran sur la portion utile du support ;

- le ou au moins un élément direct est :

  • le mécanisme de réglage, le mécanisme de réglage étant propre à régler la position et/ou l'orientation de l'écran de sorte à empêcher, dans le mode d'affichage direct, la génération d'une image virtuelle parasite issue de la réflexion du faisceau émis par l'écran sur la portion utile du support,

  • l'écran, l'écran présentant un angle de vue inférieur ou égal à 45 degrés dans le mode d'affichage direct de sorte à limiter la génération d'une image virtuelle parasite par réflexion du faisceau issu de l'écran sur la portion utile du support, et/ou

  • un obturateur, dit obturateur support, l'obturateur support étant propre à empêcher, dans le mode d'affichage direct, la réflexion du faisceau en provenance de l'écran sur le support, sans obstruer ladite réflexion dans le mode d'affichage tête haute ;

- l'écran présente une surface d'émission comprise dans un plan, dit plan écran, lorsque le ou au moins un élément direct est le mécanisme de réglage, le mécanisme de réglage est propre à régler la position et/ou l'orientation de l'écran dans le mode d'affichage direct de sorte que l'angle orienté entre, la normale à la portion utile passant par le centre de l'écran, et le plan écran, dit angle direct, est inférieur ou égal à un angle direct limite, l'angle direct limite étant l'angle à partir duquel le faisceau en provenance de l'écran n'est plus réfléchi sur la portion utile du support tout en permettant la vision directe de l'écran ;

- l'unité d'émission comprend au moins un élément optique sur le trajet du faisceau lumineux émis par l'écran dans le mode d'affichage tête haute et/ou dans le mode d'affichage direct, de sorte à modifier les propriétés de l'image visible par le profil de conducteur considéré ;

- la portion utile présente une courbure non nulle de sorte à former un miroir concave du côté conducteur, le mécanisme de réglage comprenant au moins un élément pivot propre à faire pivoter l'écran, le point de pivot de l'élément pivot étant choisi de sorte que dans le mode d'affichage tête haute l'écran soit à une distance de la portion utile comprise entre une distance minimale et une distance maximale, la distance maximale étant choisi en fonction du rayon de courbure du miroir concave de sorte que l'image virtuelle formée soit la même image pour l'oeil droit et l'oeil gauche du profil de conducteur considéré.

La présente invention concerne aussi un véhicule comprenant un dispositif d'affichage tel que décrit précédemment.

D'autres caractéristiques et avantages de l'invention apparaîtront à la lecture de la description qui suit de modes de réalisation de l'invention, donnée à titre d'exemple uniquement, et en référence aux dessins qui sont :

- [Fig 1] figure 1, une représentation schématique d'un exemple d'un dispositif d'affichage tête haute ayant un mode d'affichage tête haute et un mode d'affichage direct,
- [Fig 2] figure 2, une représentation schématique d'un exemple de réglage effectué par le mécanisme de réglage pour masquer la vision directe de l'écran dans le mode d'affichage tête haute,
- [Fig 3] figure 3, une représentation schématique d'un autre exemple de réglage effectué par le mécanisme de réglage pour masquer la vision directe de l'écran dans le mode d'affichage tête haute, en fonction du profil de conducteur considéré,
- [Fig 4] figure 4, une représentation schématique d'un exemple de réglage effectué par le mécanisme de réglage pour empêcher la génération d'une image virtuelle parasite dans le mode d'affichage direct,
- [Fig 5] figure 5, une représentation schématique d'un exemple du choix d'un angle de vue restreint pour l'écran permettant de limiter la vision directe de l'écran dans le mode d'affichage tête haute,
- [Fig 6] figure 6, une représentation schématique d'un exemple d'obturateur écran propre à, dans le mode d'affichage tête haute, masquer la vision directe de l'écran pour le profil de conducteur considéré,
- [Fig 7] figure 7, une représentation schématique d'un exemple du choix de la hauteur d'un obturateur écran de sorte à masquer la vision directe de l'écran pour un profil de conducteur considéré dans le mode d'affichage tête haute, sans masquer la vision directe de l'écran dans le mode d'affichage direct,
- [Fig 8] figure 8, une représentation schématique d'un exemple d'obturateur support propre à empêcher, dans le mode d'affichage direct, la réflexion du faisceau en provenance de l'écran sur le support, et
- [Fig 9] figure 9, une représentation schématique d'un exemple du choix de la hauteur d'un obturateur support de sorte à empêcher la réflexion du faisceau en provenance de l'écran sur le support dans le mode d'affichage direct, sans obstruer ladite réflexion dans le mode d'affichage tête haute.

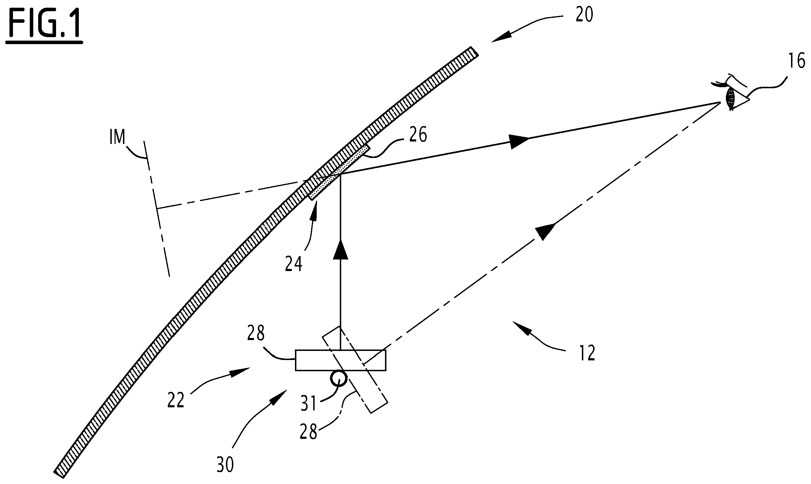

Un dispositif 12 d'affichage tête haute est illustré par la figure 1.

Le dispositif d'affichage 12 est adapté à être intégré dans un véhicule. Le véhicule est, par exemple, un véhicule terrestre, aérien ou naval. Le véhicule terrestre est, par exemple, un véhicule automobile, un véhicule ferroviaire, un deux roues (motorisé ou non) ou encore un trois roues (motorisé ou non).

Le dispositif d'affichage 12 est propre à afficher des informations de contrôle d'un véhicule à destination d'un conducteur 16 lors de la conduite du véhicule par le conducteur 16. De telles informations de contrôle sont, par exemple, des informations issues des instruments de bord du véhicule, des informations de navigation, de sécurité ou encore de communication en provenance d'un système embarqué dans le véhicule ou d'un dispositif électronique du conducteur, tel qu'un smartphone.

A titre d'exemple, les informations sont relatives à un indicateur de vitesse du véhicule, à la consommation en énergie du véhicule, à des alarmes relatives au dysfonctionnement de certains composants du véhicule ou encore à des informations de navigation (cartographie, positions, directions).

Le dispositif d'affichage 12 comprend deux modes d'affichage distincts, à savoir un mode d'affichage tête haute et un mode d'affichage direct. Dans le mode d'affichage tête haute, le dispositif d'affichage 12 est propre à former une image virtuelle IM dans le champ de vision du conducteur 16 en position de conduite. Dans le mode d'affichage direct, le dispositif d'affichage 12 est propre à afficher les informations de conduite sur un écran directement visible par le conducteur 16. Ces modes d'affichage sont détaillés dans la suite de la description.

Chaque mode d'affichage est ajustable (réglable) en fonction de différents profils de conducteurs 16, c'est-à-dire que la position et/ou l'orientation de chaque mode est ajustable en fonction des profils de conducteurs. Un profil de conducteur est un gabarit humain en posture de conduite dans le véhicule. Par exemple, chaque mode d'affichage est ajustable pour couvrir des profils de conducteurs allant du cinquième percentile de la population féminine (femme de petite taille) au quatre-vingt quinzième percentile de la population masculine (homme de grande taille).

De préférence, le dispositif d'affichage 12 a la fonction de tableau de bord du véhicule dans lequel il est intégré. Ainsi, dans ce cas, les instruments de bord du véhicule sont seulement affichés sur le dispositif d'affichage 12. La planche de bord du véhicule est, ainsi, dépourvue d'instruments de bord mécaniques intégrés dans la planche de bord et d'instruments de bord numérique intégrés dans la planche de bord différents du dispositif d'affichage 12. Dans ce cas, le dispositif d'affichage 12 est configuré pour être mis en marche automatiquement lorsque le contact est mis dans le véhicule et pour être arrêté automatiquement lorsque le contact est coupé dans le véhicule.

Comme illustré par la figure 1, le dispositif d'affichage 12 comprend un support 20, une unité 22 d'émission d'informations de contrôle du véhicule, et un mécanisme de réglage 30. Préférentiellement, le dispositif d'affichage 12 comprend aussi au moins un élément, dit élément HUD 36 et/ou au moins un élément, dit élément direct 38, dont les fonctions seront détaillées dans la suite de la description.

Le support 20 est propre à être positionné en vis-à-vis du haut du corps (au moins une partie du buste) du conducteur 16 en position de conduite.

Le support 20 est par exemple transparent ou partiellement transparent.

Le support 20 est par exemple réalisé en polycarbonate.

Le support 20 présente au moins une portion, dite portion utile 24, qui est partiellement réfléchissante.

Dans un exemple de réalisation, tel qu'illustré par la figure 1, la portion utile 24 est recouverte d'un élément réflecteur 26 conférant la fonction partiellement réfléchissante. L'élément réflecteur 26 est, par exemple, un revêtement ou un traitement (par exemple obtenu par dépôt physique ou dépôt chimique) ou un film (par exemple laminé ou maintenu par effet électrostatique).

En variante, l'élément réflecteur 26 est à l'intérieur de la portion utile 24.

Dans l'exemple de la figure 1, la portion utile 24 s'étend sur seulement une portion du support 20, en l'espèce une portion permettant de générer une image virtuelle IM dans le champ de vision (direct ou périphérique) du conducteur 16 en position de conduite comme cela sera expliqué dans ce qui suit. En variante, la portion utile 24 s'étend sur l'intégralité du support 20.

Dans l'exemple de la figure 1, la portion utile 24 est sensiblement plane. En variante, la portion utile 24 présente une courbure non nulle de sorte à former un miroir concave du côté conducteur.

De préférence, le support 20 est un élément propre à défléchir l'air lors de la conduite du véhicule. Le support 20 a ainsi la fonction d'un parebrise et est appelé avec cette dénomination. Il est aussi appelé déflecteur ou bulle, notamment dans le cas des deux roues. En variante, le support 20 est une lame aussi appelée « combiner ».

L'unité d'émission 22 est propre à afficher des informations de contrôle du véhicule. Les informations comprennent, de préférence, des informations fournies par des instruments de bord du véhicule ou encore des informations de navigation, de sécurité ou de communication provenant d'un système embarqué dans le véhicule ou d'un dispositif électronique du conducteur, tel qu'un smartphone. A cet effet, l'unité d'émission 22 est propre à émettre au moins un faisceau lumineux.

L'unité d'émission 22 comprend au moins un écran 28. L'écran 28 présente une surface d'émission comprise dans un plan, dit plan écran $P_E$.

De préférence, l'unité d'émission 22 comprend au moins un élément optique sur le trajet du faisceau lumineux émis par l'écran 28 dans le mode d'affichage tête haute et/ou dans le mode d'affichage direct, de sorte à modifier les propriétés (grossissement par exemple) de l'image visible par le profil de conducteur 16 considéré. Les éléments optiques sont par exemple des lentilles ou des miroirs. Les éléments optiques sont, par exemple, fixés ou non sur l'écran 28. Les éléments optiques sont, par exemple, utilisés dans un seul mode.

De préférence, l'écran 28 est propre à afficher une image réelle à partir de laquelle est émis le faisceau lumineux issu de l'unité d'émission 22.

De préférence, l'écran 28 est plus lumineux dans le mode d'affichage tête haute que dans le mode d'affichage direct. En variante, la luminosité de l'écran 28 est la même pour les deux modes, ou est adaptable pour chaque mode.

L'écran 28 est, par exemple, un écran à cristaux liquides (en anglais LCD pour « liquid cristal display) ou un écran OLED (en anglais pour « organic light emitting diode »).

Le mécanisme de réglage 30 est propre à régler la position et/ou l'orientation de l'écran 28 en fonction du profil de conducteur 16 considéré et de sorte que :

- dans le mode d'affichage tête haute, le faisceau lumineux émis par l'écran 28 est réfléchi sur la portion utile 24 du support 20 pour former une image virtuelle IM dans le champ de vision du profil de conducteur 16 considéré en position de conduite, et
- dans le mode d'affichage direct, les informations émises par l'écran 28 sont directement lisibles sur l'écran 28 par le profil de conducteur 16 considéré (lorsque le conducteur 16 en position de conduite regarde l'écran 28).

Le mécanisme de réglage 30 comprend par exemple un élément pivot 31 (comme sur la figure 1) propre à faire pivoter l'écran 28 entre le mode d'affichage tête haute et le mode d'affichage direct et le cas échéant à ajuster l'orientation de l'écran 28 au profil de conducteur 16 considéré. L'élément pivot 31 est, par exemple, un pivot, une rotule, une glissière courbe ou correspond à un guidage curviligne, ou encore une cinématique spécifique.

De préférence, le point de pivot de l'élément pivot 31 est choisi de sorte que, dans le mode d'affichage tête haute, l'écran 28 soit à une distance de la portion utile 24 comprise entre une distance minimale et une distance maximale.

En particulier, lorsque la portion utile 24 du support 20 présente une courbure non nulle de sorte à former un miroir concave du côté conducteur, la distance maximale est choisie en fonction du rayon de courbure du miroir concave de sorte à compenser les disparités optiques entre l'œil droit et l'œil gauche du profil de conducteur 16 considéré. En d'autres termes, la distance maximale est choisie en fonction du rayon de courbure du miroir concave de sorte que l'image virtuelle IM formée soit la même image pour l'œil droit et l'œil gauche du profil de conducteur 16 considéré. Par exemple, la distance maximale est donnée par la formule suivante :

$$ d_{\max} = -A.R^2 + B.R + C $$

Où :

- $d_{\max}$ est la distance maximale,
- R est le rayon de courbure du miroir concave, et
- A, B et C sont des nombres positifs.

La distance minimale est, par exemple, la distance minimale pour permettre la réflexion du faisceau issu de l'écran 28 sur la portion utile 24 du support 20.

De préférence, l'élément pivot 31 est propre à faire pivoter l'écran 28 selon un axe de pivotement de sorte à modifier l'orientation de l'image (réelle) générée par l'écran 28. L'image est ainsi inversée pour le mode d'affichage tête haute et non inversée pour le mode d'affichage direct. Par exemple, lorsque l'écran 28 est un écran 16/9 et que l'affichage sur l'écran 28 est un affichage paysage, l'axe de pivotement est horizontal. Lorsque l'écran 28 est un écran 16/9 et que l'affichage sur l'écran 28 est un affichage portrait, l'axe de pivotement est vertical.

De préférence, le mécanisme de réglage 30 comprend aussi un élément de translation propre à translater l'écran 28 en fonction du profil de conducteur 16 considéré et éventuellement aussi à translater l'écran 28 entre le mode d'affichage tête haute et le mode d'affichage direct.

Le ou chaque élément HUD 36 est propre à masquer la vision directe de l'écran 28 dans le mode d'affichage tête haute. Cela évite ainsi de perturber la vision du conducteur 16 avec des informations en provenance de l'écran 28 autres que celles issues de la réflexion du faisceau issu de l'écran 28 sur le support 20.

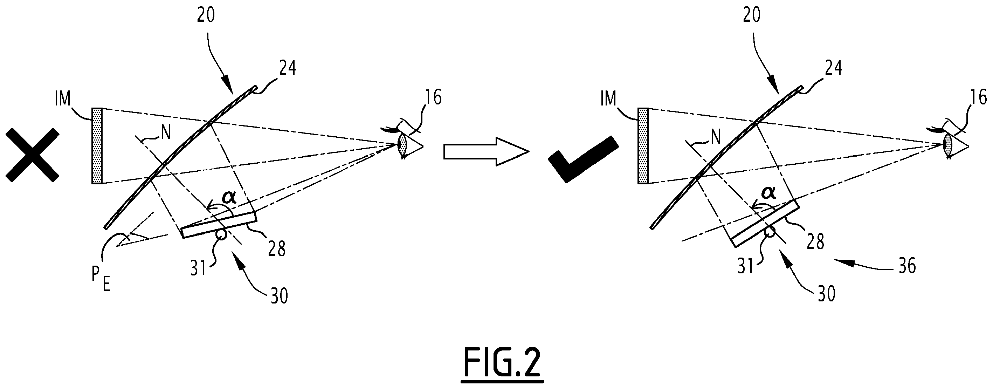

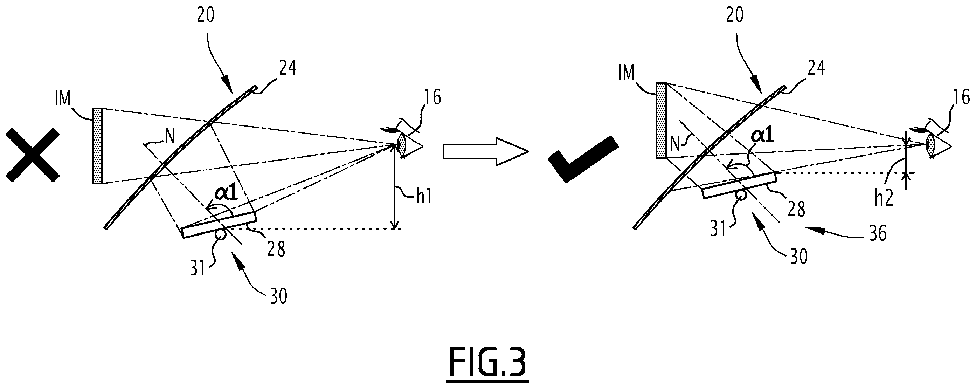

Dans un exemple de mise en oeuvre, illustré en figures 2 et 3, le ou au moins un élément HUD 36 est le mécanisme de réglage 30. Dans ce cas, le mécanisme de réglage 30 est propre à régler la position et/ou l'orientation de l'écran 28 de sorte à masquer la vision directe de l'écran 28 par le profil de conducteur 16 considéré dans le mode d'affichage tête haute.

Dans cet exemple de mise en oeuvre illustré en figures 2 et 3, le mécanisme de réglage 30 est propre à régler la position et/ou l'orientation de l'écran 28 dans le mode d'affichage tête haute de sorte que l'angle orienté entre, le plan écran $P_E$, et la normale N à la portion utile 24 passant par le centre de l'écran 28, dit angle HUD $\alpha$, est inférieur ou égal à un angle, dit angle limite HUD $\alpha_L$. L'angle limite HUD $\alpha_L$ est l'angle à partir duquel l'écran 28 est non visible pour le profil de conducteur 16 considéré tout en permettant la formation d'une image virtuelle IM dans le champ de vision du profil de conducteur 16 par réflexion du faisceau émis par l'écran 28 sur la portion utile 24 du support 20.

Ainsi, dans la configuration de gauche de la figure 2, l'angle HUD $\alpha$ est supérieur à l'angle limite HUD $\alpha_L$ et l'écran 28 reste visible en vision directe, alors que dans la configuration de droite, l'angle HUD $\alpha$ est inférieur ou égal à l'angle limite HUD $\alpha_L$ et l'écran 28 est masqué en vision directe. La figure 3 illustre le fait que l'angle limite HUD $\alpha_L$ dépend de la hauteur h des yeux du profil de conducteur 16 considéré par rapport à l'écran 28 (pour un même angle HUD $\alpha_1$, la vision directe est visible pour un profil à une hauteur $h_1$, mais est masquée pour un profil à une hauteur $h_2$).

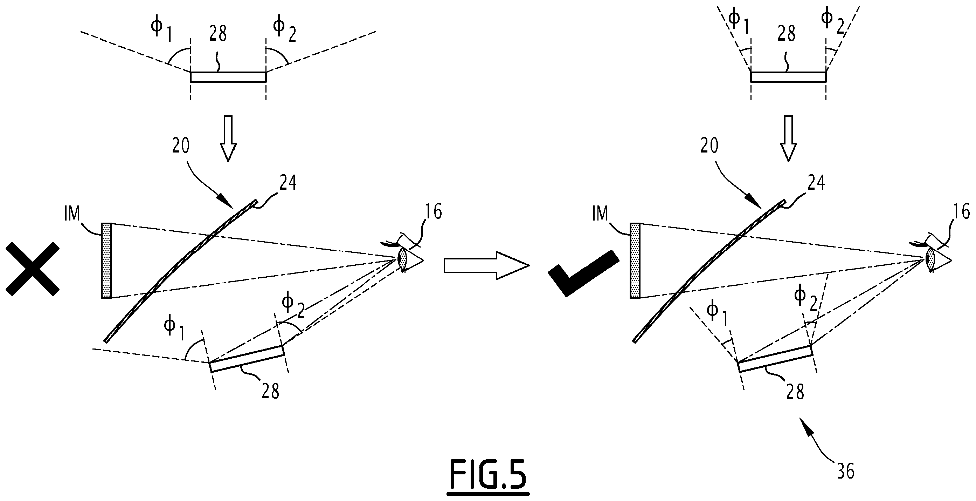

Dans un autre exemple de mise en oeuvre illustré en figure 5, le ou au moins un élément HUD 36 est l'écran 28. Dans ce cas, l'écran 28 présente un angle de vue inférieur ou égal à 45 degrés dans le mode d'affichage tête haute de sorte à limiter la vision directe de l'écran 28. La réduction de l'angle de vue de l'écran 28 est par exemple obtenue avec différentes technologies d'écran (IPS, TN) ou encore par l'ajout d'un filtre de confidentialité sur l'écran 28.

En particulier, la configuration de gauche de la figure 5 illustre un écran 28 avec un plus grand angle de vue que dans la configuration de droite. En conséquence, pour une même position et une même orientation de l'écran 28, ainsi qu'un même profil de conducteur 16, en mode d'affichage tête haute, l'écran 28 reste visible en vision directe pour la configuration de gauche, alors qu'il est masqué pour la configuration de droite. Utilisé en complément de l'exemple précédent (figures 2 et 3), cela permet de relâcher les contraintes sur l'angle HUD $\alpha$ ou la hauteur h des yeux du conducteur 16.

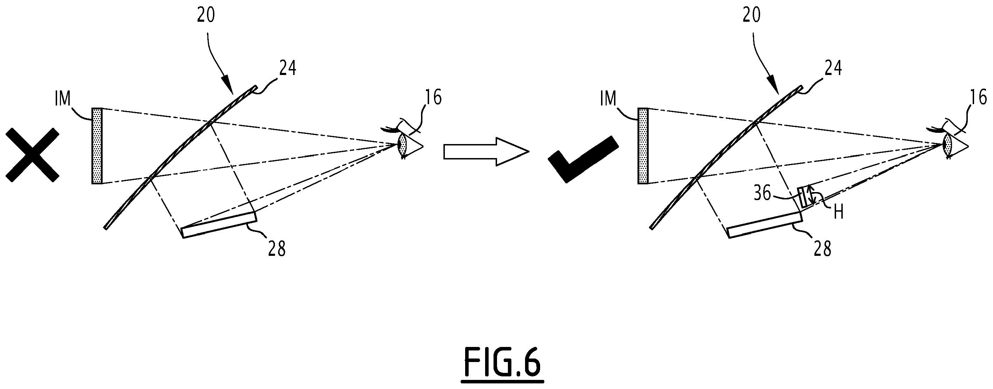

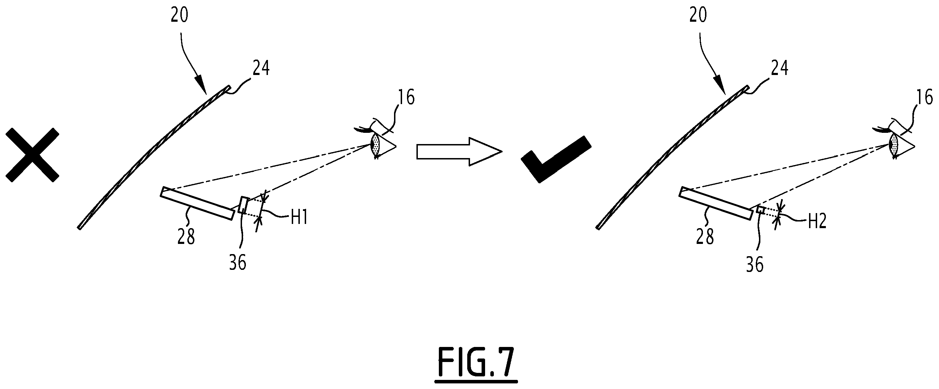

Dans encore un autre exemple de mise en oeuvre illustré en figures 6 et 7, le ou au moins un élément HUD 36 est un obturateur (brise vue mécanique), dit obturateur écran. L'obturateur écran est propre à, dans le mode d'affichage tête haute, masquer la vision directe de l'écran 28 pour le profil de conducteur 16 considéré, sans masquer la vision directe de l'écran 28 par le profil de conducteur 16 considéré dans le mode d'affichage direct.

Ainsi, dans la configuration de droite de la figure 6 par rapport à la configuration de gauche, l'obturateur écran est propre à masquer la vision directe de l'écran 28. La figure 7 illustre le choix de la hauteur de l'obturateur écran pour ne pas masquer la vision directe de l'écran 28 dans le mode d'affichage direct (pour un même profil de conducteur 16, la vision directe est visible pour un obturateur écran de hauteur H1, mais est masquée pour un obturateur écran de hauteur H2). L'ajustement peut ainsi se faire soit en modifiant la hauteur de l'obturateur écran, soit en modifiant sa position.

L'homme du métier comprendra que les différentes versions d'éléments HUD peuvent être combinées au sein d'un même dispositif d'affichage 12 (mécanisme de réglage 30 et/ou angle de vue de l'écran 28 et/ou obturateur écran).

Le ou chaque élément direct 38 est propre à empêcher, dans le mode d'affichage direct, la génération d'une image virtuelle parasite issue de la réflexion du faisceau émis par l'écran 28 sur la portion utile 24 du support 20. Cela évite ainsi de perturber la vision du conducteur 16 avec des informations autres que celles issues de la vision directe de l'écran 28 dans le mode d'affichage direct.

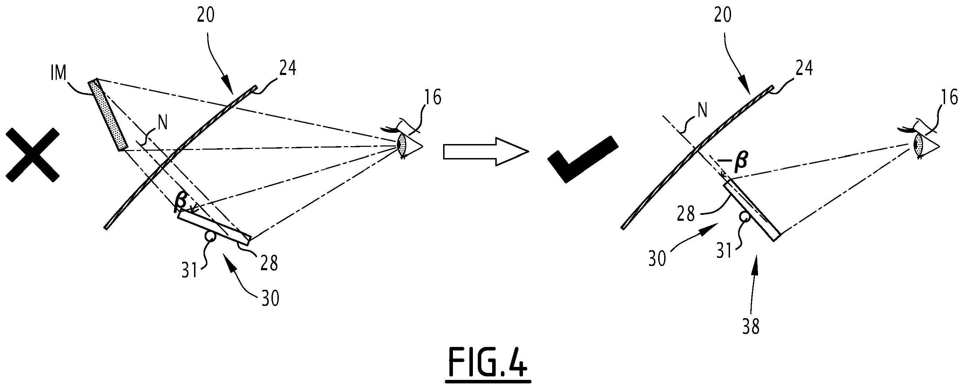

Dans un exemple de mise en oeuvre illustré en figure 4, le ou au moins un élément direct 38 est le mécanisme de réglage 30. Dans ce cas, le mécanisme de réglage 30 est propre à régler la position et/ou l'orientation de l'écran 28 de sorte à empêcher, dans le mode d'affichage direct, la génération d'une image virtuelle parasite issue de la réflexion du faisceau émis par l'écran 28 sur la portion utile 24 du support 20.

Dans cet exemple de mise en oeuvre illustré en figure 4, le mécanisme de réglage 30 est propre à régler la position et/ou l'orientation de l'écran 28 dans le mode d'affichage direct de sorte que l'angle orienté entre, la normale N à la portion utile 24 passant par le centre de l'écran 28, et le plan écran $P_E$, dit angle direct $\beta$, est inférieur ou égal à un angle direct limite $\beta_L$. L'angle direct limite $\beta_L$ (qui peut être négatif) est l'angle à partir duquel le faisceau en provenance de l'écran 28 n'est plus réfléchi sur la portion utile 24 du support 20 tout en permettant la vision directe de l'écran 28.

Ainsi, dans la configuration de gauche de la figure 4, l'angle direct $\beta$ est supérieur à l'angle limite direct, et une image virtuelle parasite issue de la réflexion du faisceau en provenance de l'écran 28 sur la portion utile 24 du support 20 est générée. Par contre, dans la configuration de droite de la figure 4, l'angle direct $\beta$ est inférieur ou égal à l'angle limite direct, et l'image virtuelle parasite n'est pas générée.

Dans un autre exemple de mise en oeuvre, le ou au moins un élément direct 38 est l'écran 28. Dans ce cas, l'écran 28 présente un angle de vue inférieur ou égal à 45 degrés dans le mode d'affichage direct de sorte à limiter la réflexion du faisceau issu de l'écran 28 sur la portion utile 24 du support 20.

La réduction de l'angle de vue de l'écran 28 est par exemple obtenue avec différentes technologies d'écran (IPS, TN) ou encore par l'ajout d'un filtre de confidentialité sur l'écran 28.

Utilisé en complément de l'exemple précédent (figure 4), cela permet de relâcher les contraintes sur l'angle direct $\beta$ ou la hauteur h des yeux du conducteur 16.

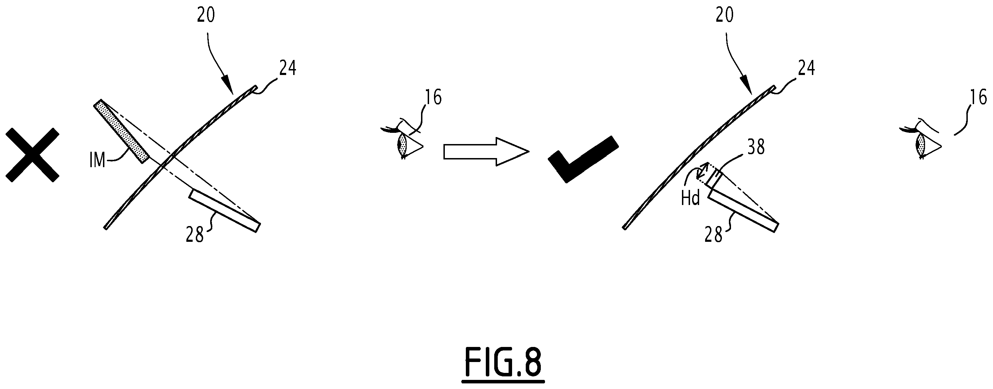

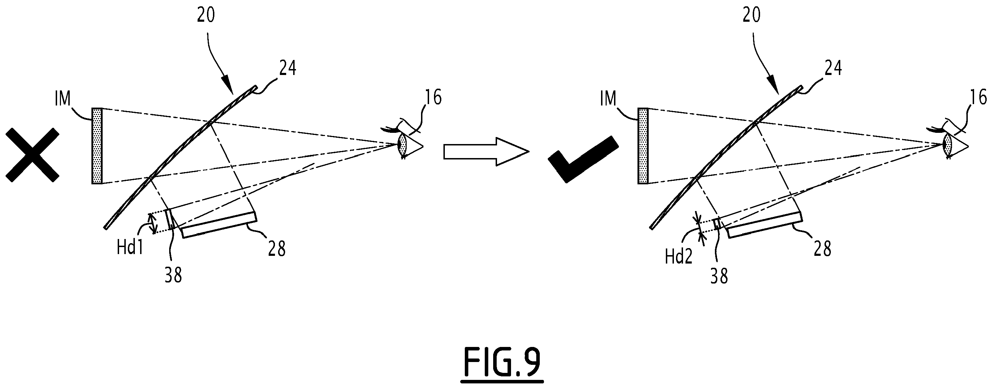

Dans encore un autre exemple de mise en oeuvre illustré en figures 8 et 9, le ou au moins un élément direct 38 est un obturateur (brise vue mécanique), dit obturateur support. L'obturateur support est propre à empêcher, dans le mode d'affichage direct, la réflexion du faisceau en provenance de l'écran 28 sur le support 20, sans obstruer ladite réflexion dans le mode d'affichage tête haute.

Ainsi, dans la configuration de droite de la figure 8 par rapport à la configuration de gauche, l'obturateur support est propre à empêcher la réflexion du faisceau en provenance de l'écran 28 sur le support 20. La figure 9 illustre le choix de la hauteur de l'obturateur support pour ne pas obstruer la réflexion du faisceau issu de l'écran 28 sur le support 20 dans le mode d'affichage tête haute (pour un même profil de conducteur 16, la réflexion est obstruée pour un obturateur support de hauteur Hd1, et est complètement dégagée pour un obturateur support de hauteur Hd2). L'ajustement peut ainsi se faire soit en modifiant la hauteur de l'obturateur support, soit en modifiant sa position.

L'homme du métier comprendra que les différentes versions d'éléments directs peuvent être combinées au sein d'un même dispositif d'affichage 12 (mécanisme de réglage 30 et/ou angle de vue de l'écran 28 et/ou obturateur support).

Un exemple de fonctionnement du dispositif d'affichage 12 va maintenant être décrit.

Dans le mode d'affichage tête haute, la position et/ou l'orientation de l'écran 28 du dispositif d'affichage 12 est ajustée par le mécanisme de réglage 30 en fonction du profil de conducteur 16 considéré de sorte que le faisceau lumineux émis par l'écran 28 est réfléchi sur la portion utile 24 du support 20 pour former une image virtuelle IM dans le champ de vision du profil de conducteur 16 considéré. Le cas échéant, le ou les éléments HUD permettent de masquer la vision directe de l'écran 28.

Dans le mode d'affichage direct, la position et/ou l'orientation de l'écran 28 du dispositif d'affichage 12 est ajustée par le mécanisme de réglage 30 en fonction du profil de conducteur 16 considéré de sorte que les informations émises par l'écran 28 sont directement lisibles sur l'écran 28 par le profil de conducteur 16 considéré. Le cas échéant, le ou les éléments directs permettent d'empêcher la génération d'une image virtuelle parasite issue de la réflexion du faisceau émis par l'écran 28 sur la portion utile 24 du support 20.

Ainsi, le dispositif d'affichage 12 de par ses deux modes d'affichage est un dispositif ergonomique et peu volumineux, facilement intégrable dans un véhicule. Un tel dispositif 12 permet de faciliter la visualisation par le conducteur 16 d'informations utiles à la conduite, et ce en toute sécurité quelle que soit les conditions ambiantes puisqu'il est facile de passer d'un mode à un autre.

Dans les modes de réalisation comprenant des éléments HUD et/ou éléments directs, les images parasites (issues de réflexions parasites dans le mode d'affichage direct et de la vision directe de l'écran 28 dans le mode d'affichage tête haute) sont en outre réduites afin d'améliorer encore la visualisation des informations utiles, et permettre la conduite en toute sécurité.

Un tel dispositif d'affichage 12 est en outre adapté à être intégré dans un véhicule en remplacement du tableau de bord. Il peut toutefois aussi être utilisé en complément du tableau de bord.

L'homme du métier comprendra que les modes de réalisation décrits précédemment sont susceptibles d'être combinés entre eux lorsque de telles combinaisons sont compatibles.

## Revendications

**1.** Dispositif (12) d'affichage tête haute pour un véhicule, le dispositif d'affichage (12) comprenant un mode d'affichage tête haute et un mode d'affichage direct, chaque mode étant ajustable pour différents profils de conducteurs (16), le dispositif d'affichage (12) comprenant :

- un support (20) propre à être positionné en vis-à-vis du haut du corps d'un conducteur (16) en position de conduite, au moins une portion du support (20), dite portion utile (24), étant partiellement réfléchissante,
- une unité (22) d'émission d'informations de contrôle du véhicule, l'unité d'émission (22) comprenant un écran (28) propre à émettre au moins un faisceau lumineux, et
- un mécanisme (30) de réglage de la position et/ou de l'orientation de l'écran (28) en fonction du profil de conducteur (16) considéré et de sorte que :

• dans le mode d'affichage tête haute, le faisceau lumineux émis par l'écran (28) est réfléchi sur la portion utile (24) du support (20) pour former une image virtuelle (IM) dans le champ de vision du profil de conducteur (16) considéré en position de conduite, et

• dans le mode d'affichage direct, les informations émises par l'écran (28) sont directement lisibles sur l'écran (28) par le profil de conducteur (16) considéré.

**2.** Dispositif (12) selon la revendication 1, dans lequel le dispositif (12) comprend au moins un élément, dit élément HUD (36), propre à masquer la vision directe de l'écran (28) dans le mode d'affichage tête haute.

**3.** Dispositif (12) selon la revendication 2, dans lequel le ou au moins un élément HUD (36) est :

a. le mécanisme de réglage (30), le mécanisme de réglage (30) étant propre à régler la position et/ou l'orientation de l'écran (28) de sorte à masquer la vision directe de l'écran (28) par le profil de conducteur (16) considéré dans le mode d'affichage tête haute, et/ou

b. l'écran (28), l'écran (28) présentant un angle de vue inférieur ou égal à 45 degrés dans le mode d'affichage tête haute de sorte à limiter la vision directe de l'écran (28), et/ou

c. un obturateur, dit obturateur écran, l'obturateur écran étant propre à, dans le mode d'affichage tête haute, masquer la vision directe de l'écran (28) pour le profil de conducteur (16) considéré, sans masquer la vision directe de l'écran (28) par le profil de conducteur (16) considéré dans le mode d'affichage direct.

**4.** Dispositif (12) selon la revendication 3, dans lequel l'écran (28) présente une surface d'émission comprise dans un plan, dit plan écran ($P_E$), lorsque le ou au moins un élément HUD (36) est le mécanisme de réglage (30), le mécanisme de réglage (30) est propre à régler la position et/ou l'orientation de l'écran (28) dans le mode d'affichage tête haute de sorte que l'angle orienté entre, le plan écran ($P_E$), et la normale (N) à la portion utile (24) passant par le centre de l'écran (28), dit angle HUD ($\alpha$), est inférieur ou égal à un angle, dit angle limite HUD ($\alpha_L$), l'angle limite HUD ($\alpha_L$) étant l'angle à partir duquel l'écran (28) est non visible pour le profil de conducteur (16) considéré tout en permettant la formation d'une image virtuelle (IM) dans le champ de vision du profil de conducteur (16) par réflexion du faisceau émis par l'écran (28) sur la portion utile (24) du support (20).

**5.** Dispositif (12) selon l'une quelconque des revendications 1 à 4, dans lequel le dispositif (12) comprend au moins un élément, dit élément direct (38), propre à empêcher, dans le mode d'affichage direct, la génération d'une image virtuelle parasite issue de la réflexion du faisceau émis par l'écran (28) sur la portion utile (24) du support (20).

**6.** Dispositif (12) selon la revendication 5, dans lequel le ou au moins un élément direct (38) est :

> a. le mécanisme de réglage (30), le mécanisme de réglage (30) étant propre à régler la position et/ou l'orientation de l'écran (28) de sorte à empêcher, dans le mode d'affichage direct, la génération d'une image virtuelle parasite issue de la réflexion du faisceau émis par l'écran (28) sur la portion utile (24) du support (20),
> b. l'écran (28), l'écran (28) présentant un angle de vue inférieur ou égal à 45 degrés dans le mode d'affichage direct de sorte à limiter la génération d'une image virtuelle parasite par réflexion du faisceau issu de l'écran (28) sur la portion utile (24) du support (20), et/ou
> c. un obturateur, dit obturateur support, l'obturateur support étant propre à empêcher, dans le mode d'affichage direct, la réflexion du faisceau en provenance de l'écran (28) sur le support (20), sans obstruer ladite réflexion dans le mode d'affichage tête haute.

**7.** Dispositif (12) selon l'une quelconque des revendications 1 à 6, dans lequel l'écran (28) présente une surface d'émission comprise dans un plan, dit plan écran ($P_E$), lorsque le ou au moins un élément direct (38) est le mécanisme de réglage (30), le mécanisme de réglage (30) est propre à régler la position et/ou l'orientation de l'écran (28) dans le mode d'affichage direct de sorte que l'angle orienté entre, la normale

(N) à la portion utile (24) passant par le centre de l'écran (28), et le plan écran ($P_E$), dit angle direct ($\beta$), est inférieur ou égal à un angle direct limite ($\beta_L$), l'angle direct limite ($\beta_L$) étant l'angle à partir duquel le faisceau en provenance de l'écran (28) n'est plus réfléchi sur la portion utile (24) du support (20) tout en permettant la vision directe de l'écran (28).

**8.** Dispositif (12) selon l'une quelconque des revendications 1 à 7, dans lequel l'unité d'émission (22) comprend au moins un élément optique sur le trajet du faisceau lumineux émis par l'écran (28) dans le mode d'affichage tête haute et/ou dans le mode d'affichage direct, de sorte à modifier les propriétés de l'image visible par le profil de conducteur (16) considéré.

**9.** Dispositif (12) selon l'une quelconque des revendications 1 à 8, dans lequel la portion utile (24) présente une courbure non nulle de sorte à former un miroir concave du côté conducteur, le mécanisme de réglage (30) comprenant au moins un élément pivot (31) propre à faire pivoter l'écran (28), le point de pivot de l'élément pivot (31) étant choisi de sorte que dans le mode d'affichage tête haute l'écran (28) soit à une distance de la portion utile (24) comprise entre une distance minimale et une distance maximale, la distance maximale étant choisi en fonction du rayon de courbure du miroir concave de sorte que l'image virtuelle (IM) formée soit la même image pour l'oeil droit et l'oeil gauche du profil de conducteur (16) considéré.

**10.** Véhicule comprenant un dispositif d'affichage selon l'une quelconque des revendications 1 à 9.

**Patentansprüche**

**1.** Head-up-Anzeigevorrichtung (12) für ein Fahrzeug, die Anzeigevorrichtung (12) umfassend einen Head-up-Anzeigemodus und einen Direktanzeigemodus, wobei jeder Modus für verschiedene Fahrerprofile (16) einstellbar ist, die Anzeigevorrichtung (12) umfassend:

> - eine Halterung (20), die geeignet ist, um gegenüber dem Oberkörper eines Fahrers (16) in Fahrposition positioniert zu werden, wobei mindestens ein Abschnitt der Halterung (20), der sogenannte Nutzabschnitt (24), teilweise reflektierend ist,
> - eine Einheit (22) zum Senden von Fahrzeugsteuerungsinformationen, die Sendeeinheit (22) umfassend einen Bildschirm (28), der geeignet ist, um mindestens einen Lichtstrahl zu emittieren, und
> - einen Mechanismus (30) zum Einstellen der Position und/oder Ausrichtung des Bildschirms (28) abhängig von dem jeweiligen Fahrerprofil (16) und sodass:

> • in dem Head-up-Anzeigemodus der von dem Bildschirm (28) emittierte Lichtstrahl auf dem Nutzabschnitt (24) der Halterung (20) reflektiert wird, um ein virtuelles Bild (IM) in dem Sichtfeld des jeweiligen Fahrerprofils (16) in Fahrposition zu erzeugen, und
> • in dem Direktanzeigemodus die von dem Bildschirm (28) emittierten Informationen für das jeweilige Fahrerprofil (16) direkt auf dem Bildschirm (28) lesbar sind.

**2.** Vorrichtung (12) nach Anspruch 1, wobei die Vorrichtung (12) mindestens ein Element, das sogenannte HUD-Element (36), umfasst, das geeignet ist, um in dem Head-up-Anzeigemodus die direkte Sicht auf den Bildschirm (28) zu verdecken.

**3.** Vorrichtung (12) nach Anspruch 2, wobei das oder mindestens ein HUD-Element (36) Folgendes ist:

> a. der Einstellmechanismus (30), wobei der Einstellmechanismus (30) geeignet ist, um die Position und/oder die Ausrichtung des Bildschirms (28) einzustellen, um direkte Sicht auf den Bildschirm (28) durch das jeweilige Fahrerprofil (16) in dem Head-up-Anzeigemodus zu verdecken, und/oder
> b. der Bildschirm (28), wobei der Bildschirm (28) in dem Head-up-Anzeigemodus einen Betrachtungswinkel von 45 Grad oder weniger aufweist, um die direkte Sicht auf den Bildschirm (28) zu beschränken, und/oder
> c. ein Verschluss, bezeichnet als Bildschirmverschluss, wobei der Bildschirmverschluss geeignet ist, um in dem Head-up-Anzeigemodus die direkte Sicht auf den Bildschirm (28) für das jeweilige Fahrerprofil (16) zu verdecken, ohne die direkte Sicht auf den Bildschirm (28) durch das jeweilige Fahrerprofil (16) in dem Direktanzeigemodus zu verdecken.

**4.** Vorrichtung (12) nach Anspruch 3, wobei der Bildschirm (28) eine Emissionsoberfläche aufweist, die in einer Ebene, der sogenannten Bildschirmebene ($P_E$), liegt, wenn das oder mindestens ein HUD-Element (36) der Einstellmechanismus (30) ist, der Einstellmechanismus (30) geeignet ist, die Position und/oder die Ausrichtung des Bildschirms (28) in dem Head-up-Anzeigemodus einzustellen, sodass der orientierte Winkel zwischen der Bildschirmebene ($P_E$) und der Senkrechten (N) des Nutzabschnitts (24), die durch die Mitte des Bildschirms (28) verläuft, der als HUD-Winkel ($\alpha$) bezeichnet wird, kleiner oder gleich einem Winkel ist, der als Grenzwinkel

HUD ($\alpha_L$) bezeichnet wird, wobei der HUD-Grenzwinkel ($\alpha_L$) der Winkel ist, ab dem der Bildschirm (28) für das jeweilige Fahrerprofil (16) nicht sichtbar ist, während er gleichzeitig die Bildung eines virtuellen Bilds (IM) in dem Sichtfeld des Fahrerprofils (16) durch Reflexion des von dem Bildschirm (28) emittierten Strahls an dem Nutzabschnitt (24) der Halterung (20) ermöglicht.

**5.** Vorrichtung (12) nach einem der Ansprüche 1 bis 4, wobei die Vorrichtung (12) mindestens ein Element, das sogenannte direkte Element (38), umfasst, das geeignet ist, um in dem Direktanzeigemodus das Erzeugen eines parasitären virtuellen Bildes zu verhindern, das aus der Reflexion des von dem Bildschirm (28) emittierten Strahls an dem Nutzabschnitt (24) der Halterung (20) entsteht.

**6.** Vorrichtung (12) nach Anspruch 5, wobei das oder mindestens ein direktes Element (38) Folgendes ist:

> a. den Einstellmechanismus (30), wobei der Einstellmechanismus (30) geeignet ist, um die Position und/oder die Ausrichtung des Bildschirms (28) einzustellen, sodass in dem Direktanzeigemodus das Erzeugen eines parasitären virtuellen Bildes verhindert wird, das aus der Reflexion des von dem Bildschirm (28) emittierten Strahls an dem Nutzabschnitt (24) der Halterung (20) entsteht,
> b. der Bildschirm (28), wobei der Bildschirm (28) in dem Direktanzeigemodus einen Betrachtungswinkel von 45 Grad oder weniger aufweist, um das Erzeugen eines virtuellen Störbilds durch Reflexion des Strahls von dem Bildschirm (28) an dem Nutzabschnitt (24) der Halterung (20) zu begrenzen, und/oder
> c. einen Verschluss, bezeichnet als Halterungsverschluss, wobei der Halterungsverschluss geeignet ist, um in dem Direktanzeigemodus die Reflexion des von dem Bildschirm (28) kommenden Strahls an der Halterung (20) zu verhindern, ohne diese Reflexion in dem Head-up-Anzeigemodus zu behindern.

**7.** Vorrichtung (12) nach einem der Ansprüche 1 bis 6, wobei der Bildschirm (28) eine Emissionsoberfläche aufweist, die in einer Ebene, der sogenannten Bildschirmebene ($P_E$), liegt, wenn das oder mindestens ein direktes Element (38) der Einstellmechanismus (30) ist, der Einstellmechanismus (30) geeignet ist, die Position und/oder Ausrichtung des Bildschirms (28) im Direktanzeigemodus einzustellen, sodass der Winkel, der zwischen der Senkrechten (N) auf den Nutzabschnitt (24), die durch die Mitte des Bildschirms (28) verläuft, und der Bildschirmebene ($P_E$), der als Direktwinkel ($\beta$) bezeichnet wird, kleiner oder gleich einem direkten Grenzwinkel ($\beta_L$) ist, wobei der

direkte Grenzwinkel ($\beta_L$) der Winkel ist, ab dem der von dem Bildschirm (28) kommende Strahl nicht mehr an dem Nutzabschnitt (24) der Halterung (20) reflektiert wird, während er die direkte Sicht auf den Bildschirm (28) zulässt.

8. Vorrichtung (12) nach einem der Ansprüche 1 bis 7, wobei die Sendeeinheit (22) mindestens ein optisches Element in dem Strahlengang des von dem Bildschirm (28) in dem Head-up-Anzeigemodus und/oder in dem Direktanzeigemodus emittierten Lichtstrahls umfasst, um die Eigenschaften des für das jeweilige Fahrerprofil (16) sichtbaren Bilds zu verändern.

9. Vorrichtung (12) nach einem der Ansprüche 1 bis 8, wobei der Nutzabschnitt (24) eine von Null verschiedene Krümmung aufweist, um auf der Fahrerseite einen konkaven Spiegel zu bilden, wobei der Einstellmechanismus (30) mindestens ein Schwenkelement (31) umfasst, das geeignet ist, um den Bildschirm (28) zu schwenken, wobei der Schwenkpunkt des Schwenkelements (31) gewählt ist, sodass der Bildschirm (28) in dem Head-up-Anzeigemodus in einem Abstand von dem Nutzabschnitt (24) ist, der zwischen einem minimalen und einem maximalen Abstand liegt, wobei der maximale Abstand abhängig von dem Krümmungsradius des konkaven Spiegels gewählt ist, sodass das erzeugte virtuelle Bild (IM) das gleiche Bild für das rechte und das linke Auge des jeweiligen Fahrerprofils (16) ist.

10. Fahrzeug, umfassend eine Anzeigevorrichtung nach einem der Ansprüche 1 bis 9.

**Claims**

1. A head-up display device (12) for a vehicle, the display device (12) comprising a head-up display mode and a direct display mode, each mode being adjustable for different driver profiles (16), the display device (12) comprising:

   - a support (20) apt for being positioned opposite the upper part of the body of a driver (16) in the driving position, at least a portion of the support (20), called the useful portion (24), being partially reflective,
   - a unit (22) for transmitting vehicle control information, the transmission unit (22) comprising a screen (28) apt for emitting at least one light beam, and
   - a mechanism (30) for adjusting the position and/or orientation of the screen (28) according to the relevant driver profile (16) and such that:

      • In the head-up display mode, the light beam emitted by the screen (28) is reflected on the useful portion (24) of the support (20) to form a virtual image (IM) in the field of view of the relevant driver profile (16) in the driving position, and
      • in direct display mode, the items of information emitted by the screen (28) are directly readable on the screen (28) by the relevant driver profile (16).

2. The device (12) according to claim 1, wherein the device (12) comprises at least one element, called the HUD element (36), apt to mask the direct view of the screen (28) in the head-up display mode.

3. The device (12) according to claim 2, wherein the or at least one HUD element (36) is:

   a. the adjustment mechanism (30), the adjustment mechanism (30) being apt to adjust the position and/or orientation of the screen (28) so as to mask the direct view of the screen (28) by the relevant driver profile (16) in the head-up display mode, and/or
   b. the screen (28), the screen (28) having an angle of view of less than or equal to 45 degrees in the head-up display mode so as to limit the direct view of the screen (28), and/or
   c. a shutter, called a screen shutter, the screen shutter being apt, in the head-up display mode, for masking the direct view of the screen (28) for the relevant driver profile (16), without masking the direct view of the screen (28) by the relevant driver profile (16) in the direct display.

4. The device (12) according to claim 3, wherein the screen (28) has an emitting surface comprised in a plane, called the screen plane ($P_E$), when the or at least one HUD element (36) is the adjustment mechanism (30), the adjustment mechanism (30) being apt for adjusting the position and/or orientation of the screen (28) in the head-up display mode so that the angle oriented between, the screen plane ($P_E$), and the normal (N) to the useful portion (24) passing through the center of the screen (28), called the HUD angle ($\alpha$), is less than or equal to an angle, called the limit HUD angle ($\alpha_L$), the limit HUD angle ($\alpha_L$) being the angle from which the screen (28) is not visible for the relevant driver profile (16) while permitting the formation of a virtual image (IM) in the field of view of the driver profile (16) by reflection of the beam emitted by the screen (28) on the useful portion (24) of the support (20).

5. The device (12) according to any of claims 1 to 4, wherein the device (12) comprises at least one element, called a direct element (38), apt for preventing, in the direct display mode, the generation of a spurious virtual image resulting from the reflection of the beam emitted by the screen (28) on the useful portion (24) of the support (20).

6. The device (12) according to claim 5, wherein the or at least one direct element (38) is:

   a. the adjustment mechanism (30), the adjustment mechanism (30) being apt for adjusting the position and/or orientation of the screen (28) so as to prevent, in the direct display mode, the generation of a spurious virtual image resulting from the reflection of the beam emitted by the screen (28) on the useful portion (24) of the support (20),
   b. the screen (28), the screen (28) having an angle of view less than or equal to 45 degrees in the direct display mode so as to limit the generation of a spurious virtual image by reflection of the beam coming from the screen (28) onto the useful portion (24) of the support (20), and/or
   c. a shutter, called a support shutter, the support shutter being apt for preventing, in the direct display mode, the reflection of the beam from the screen (28) onto the support (20), without obstructing said reflection in the head-up display.

7. The device (12) according to any of claims 1 to 6, wherein the screen (28) has an emitting surface comprised in a plane, called the screen plane ($P_E$), when the or at least one direct element (38) is the adjustment mechanism (30), the adjustment mechanism (30) being apt for adjusting the position and/or orientation of the screen (28) in the direct display mode so that the angle oriented between, the normal (N) to the useful portion (24) passing through the center of the screen (28), and the screen plane ($P_E$), called the direct angle ($\beta$), is less than or equal to a limit direct angle ($\beta$), the limit direct angle ($\beta$) being the angle from which the beam coming from the screen (28) is no longer reflected onto the useful portion (24) of the support (20) while permitting the direct view of the screen (28).

8. The device (12) according to any of claims 1 to 7, wherein the emission unit (22) comprises at least one optical element along the path of the light beam emitted by the screen (28) in the head-up display mode and/or in the direct display mode, so as to modify the properties of the image visible by the relevant driver (16).

9. The device (12) according to any of claims 1 to 8, wherein the useful portion (24) as a non-zero curvature so as to form a concave mirror on the driver's side, the adjustment mechanism (30) comprising at least one pivot element (31) apt to pivot the screen (28), the pivot point of the pivot element (31) being chosen so that in the head-up display mode the screen (28) is at a distance from the useful portion (24) comprised between a minimum distance and a maximum distance, the maximum distance being chosen depending on the radius of curvature of the concave mirror so that the virtual image (IM) formed is the same image for the right eye and the left eye of the relevant driver profile (16).

10. A vehicle comprising a display device according to any of claims 1 to 9.

**FIG.1**

FIG.2

_FIG.3_

FIG.4

**FIG.5**

## FIG.6

EP 4 599 286 B1

FIG.7

EP 4 599 286 B1

FIG.8

**FIG.9**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2049984 A